# NEW EUROPEAN PATENT SPECIFICATION

(11) **EP 2 193 721 B2**
(45) Date of publication and mention of the opposition decision: **26.08.2020**
(45) Mention of the grant of the patent: 22.11.2017
(21) Application number: 08833261.4
(22) Date of filing: 26.09.2008
(51) Int. Cl.: A23F 3/16, A23F 3/18, A23F 3/20

(54) **TEA EXTRACT, TEA DRINK AND METHOD OF PRODUCING THE SAME**
TEEEXTRAKT, TEEGETRÄNK UND VERFAHREN ZU DEREN HERSTELLUNG
EXTRAIT DE THÉ, BOISSON AU THÉ ET LEURS PROCÉDÉS DE PRODUCTION

(30) Priority: 26.09.2007 JP 2007249481; 05.12.2007 JP 2007314237
(43) Date of publication of application: 09.06.2010
(73) Proprietor: Suntory Beverage & Food Limited, Chuo-ku, Tokyo 104-0031 (JP)
(72) Inventor: NAGAO, Koji, Kawasaki-shi Kanagawa 211-0067 (JP); MAKI, Hideki, Kawasaki-shi Kanagawa 211-0067 (JP); SUZUKI, Ken, Kawasaki-shi Kanagawa 211-0067 (JP); YOKOO, Yoshiaki, Kawasaki-shi Kanagawa 211-0067 (JP)
(74) Representative: Vossius & Partner Patentanwälte Rechtsanwälte mbB
(86) International application number: PCT/JP2008/067385
(87) International publication number: WO 2009/041555

(56) References cited:
- EP-A1- 0 460 402
- JP-A- 9 220 055
- JP-A- 2004 010 545
- JP-A- 2005 124 500
- JP-A- 2006 042 625
- JP-A- 2006 246 714
- KANNO N. ET AL.: 'Catechin o Zoryo shita Ryokucha Inryo ni Kansuru Chosa Kenkyu-sono 1 Catechin Gan'yuryo no Tokusei' BULLETIN OF SHIZUOKA INSTITUTE OF ENVIRONMENT AND HYGIENE vol. 47, 2004, pages 41 - 45, XP008142325
- KANNO N. ET AL.: 'Catechin o Zoryo shita Ryokucha Inryo ni Kansuru Chosa Kenkyu- sono 2 Catechin Igai no Kagaku Seibun ni Tsuite' BULLETIN OF SHIZUOKA INSTITUTE OF ENVIRONMENT AND HYGIENE vol. 47, 2004, pages 47 - 50, XP008142329
- KEIICHIRO MURAMATSU HENSHU,: '4. Cha no Kagaku 4. 1 Cha no Kagaku Seibun to sono Gan'yuryo, Series <Shokuhin no Kagaku>' CHA NO KAGAKU, 1ST EDITION, 8TH PRINT 1997, pages 85 - 93, XP008142330
- DATABASE WPI Week 200367, Derwent Publications Ltd., London, GB; AN 2003-701022 & JP 2003 144049 A (HASEGAWA CO LTD) 20 May 2003
- DATABASE WPI Week 200760, Derwent Publications Ltd., London, GB; AN 2007-631329 & JP 2007 195458 A (HASEGAWA CO LTD) 09 August 2007
- DATABASE WPI Week 200634, Derwent Publications Ltd., London, GB; AN 2006-323945 & JP 2006 115772 A (SHIKURO CHEM KK) 11 May 2006
- Muneyuki Nakagawa: "Chemical components and taste of green tea", JARQ : Japan agricultural research quarterly, vol. 9, no. 3 1975, pages 156-160,

## Description

### TECHNICAL FIELD

The present invention relates to a tea extract, a tea beverage, and a method of making the same. In particular, the present invention relates to a method of making a tea extract that contains flavor components of tea, i.e., high concentrations of amino acids, is free from bitter/astringent components, i.e., catechins, and thus satisfies users discriminating tastes.

### BACKGROUND ART

As concerns green teas, stronger taste based on amino acids extracted from tea leaves such as gyokuro (refined green tea) are essentially evaluated as high-quality teas or skillful extraction. For example, extraction of gyokuro at a temperature of about 60°C or extraction of regular sencha (natural leaf tea) with ice water is carried out for selective extraction of flavor components without extraction of bitter/astringent components, i.e., catechins. Accordingly, green teas having strong flavor and low catechin content are evaluated as fragrant teas in many cases.

In recent year, a large number of bottled tea beverages bottled into cans or PET bottles have been developed. Among tea beverages, the market on green tea beverages is growing. Consumers exhibit a strong preference for such tea beverages and require development of bottled tea beverages having strong flavor/mellow taste with less bitter/astringent taste, like extraction with a teapot.

Method of making tea extracts or tea beverages having rich flavor are reported as follows: Patent Literature 1 discloses a method of extracting useful components from teas by at least two water extraction processes, i.e., low-temperature water extraction and high-temperature water extraction. In the case of green tea, water extraction at a low temperature of 40 to 60°C can primarily extracts flavor tastes and bitter components such as amino acids, catechin, and caffeine, and aroma components having relatively low boiling points such as hexanal, while extraction at high temperature can primarily extract bitter components such as catechin.

Patent Literature 2 discloses a tea beverage that is produced by two-stage extraction including hot-water extraction of tea leaves at 80 to 100°C and then low-temperature extraction at 30 to 50°C and that has high aroma comparable with a tea beverage by high-temperature extraction, profoundly flavor and highly mellow taste comparable with a tea beverage by low-temperature extraction, and week astringent taste.

Patent Literature 3 discloses a tea beverage that is a mixture of an extract produced by water extraction of green tea leaves at -5 to 9°C and another extract produced by hot-water extraction of the extraction residue at 50 to 100°C and that has moderated bitter/astringent taste regardless of high levels of catechins.

Patent Literature 4 discloses preparation of a tea extract having flavor and reduced astringent taste by immersion of tea leaves in oxygen-free static water at 0 to 36°C.

Patent Literature 5 discloses production of a tea beverage to be sold and taken in at a cooled state below normal temperature in which extraction is carried out using degassed water containing a dissolved oxygen of 1 ppm or less at 20°C or more and less than 60°C (preferably 50°C or less), such that the total catechin content and the catechin content of a gallic acid ester type are controlled within specific ranges, thereby the beverage has moderated rough and astringent taste.

Furthermore, methods are disclosed which involve extraction with enzyme in order to enhance the relish of tea extracts. For example, Patent Literature 6 discloses hot-water extraction of common green tea in the presence of tannase. This process has an advantage of enhancement of relish endemic to tea.

Patent Literature 7 discloses detannin treatment of a tea extract and then a reaction of the extract with glutaminase in order to increase the glutamic acid content in the tea extract.

Patent Literature 8 discloses an extract exhibiting superior relish produced by extraction of sencha (green tea) in the presence of protopectinase and protease. This literature further states that the protease decomposes protein in the tea leaves to generate amino acids, so that the relish of the amino acids suppresses the bitter/astringent taste of the extract.

Patent Literature 9 discloses a posh green tea extract that is produced by extraction of tea raw material in the presence of two enzymes, i.e., protease and tannase and that has highly flavor/mellow taste with reduced astringent taste as a result of synergic effect of these two enzymes, which is unexpected from single use of these enzymes.

Patent Literature 10 discloses a method of making a green tea beverage containing a high-flavor tea extract prepared by extraction after zymolysis of tea leaves and a hot tea extract prepared by high-temperature extraction.

In addition, reported are tea beverages containing amino acids and exhibiting reduced bitter/astringent taste. For example, Patent Literature 11 discloses a semi-fermented tea containing theanine and exhibiting reduced bitter/astringent taste. The applicants also discloses a tea beverage having a catechin content tin the range of 40 to 100 mg/100 mL, containing glutamic acid in an amount of 6 to 20 mg/100 mL, and reduced astringent taste due to catechin (Patent Literature 12).

Patent Literature 13 discloses a tea extract obtained by sterilizing tea leaves with hot water and then extracting the tea leaves in the presence of protease and tannase.
Patent Literature 14 (intermediate document) discloses a green tea extract for use as a functional food, food supplement or corresponding ingredient, the use thereof and the method for producing that green tea extract.
Patent Literature 15 (intermediate document) relates to a specific process for purifying theanine.
[Patent Literature 1] Japanese Unexamined Patent Application Publication No. 11-56242
[Patent Literature 2] Japanese Unexamined Patent Application Publication No. 6-303904
[Patent Literature 3] Japanese Patent No. 3590027
[Patent Literature 4] Japanese Unexamined Patent Application Publication No. 2000-50799
[Patent Literature 5] Japanese Unexamined Patent Application Publication No. 6-343389
[Patent Literature 6] Japanese Unexamined Patent Application Publication No. 49-110900
[Patent Literature 7] Japanese Unexamined Patent Application Publication No. 2005-124500
[Patent Literature 8] Japanese Unexamined Patent Application Publication No. 1-300848
[Patent Literature 9] Japanese Patent No. 3782718
[Patent Literature 10] Japanese Patent No. 3820372
[Patent Literature 11] Japanese Unexamined Patent Application Publication No. 2000-197449
[Patent Literature 12] Japanese Unexamined Patent Application Publication No. 2006-42728
[Patent Literature 13] Japanese Unexamined Patent Application Publication No. 2003-144049
[Patent Literature 14] WO 2008/037417 A1
[Patent Literature 15] WO 2008/138706 A1

### DISCLOSURE OF THE INVENTION

### PROBLEMS TO BE SOLVED BY THE INVENTION

As described above, various processes for enhancement of relish in tea extracts are known. It is known that the enzymes act on proteins and fibers in tea leaves and/or tea extracts to increase the concentration of amino acids being delicious components in the extracts, in extraction using enzymes. The relish of tea extracts produced by these processes, however, are not always sufficiently satisfactory. Accordingly, eagerly awaited is development of tea extracts that contain high concentrations of amino acids being flavor/mellow components, and reduced amounts of catechins being bitter/astringent components.

Accordingly, an object of the present invention is to provide a tea extract containing high concentration of flavor/mellow components and reduced amounts of bitter/astringent components and a method of making the same. Another object of the present invention is to provide a bottled tea beverage that exhibits profound flavor with reduced amounts of astringent components and that can be sold in large quantities.

### MEANS FOR SOLVING THE PROBLEMS

The inventors had extensively studied to solve the problems described above, and concluded that catechins mitigate or preclude concentration of amino acids by the enzyme during extraction using an enzyme (also referred to as "enzyme extraction" throughout the specification). Based on the conclusion, the inventors discovered that enzyme extraction of tea leaves after at least partial removal of catechins leads to significantly high amino acid content in the resulting tea extract with reduced amounts of catechins. Furthermore, the inventors discovered that the tea extract had a novel composition that differs from any known composition, that is, a composition containing a total amino acid content of 7.0 weight % or more, wherein the proportion of the theanine to the amino acids is 0.1 or more and a total content of catechins of 8.0 weight % or less, on the basis of the solid content derived from the tea leaves in the tea extract, and this extract exhibits flavor/mellow taste without bitter/astringent taste. As a result, the inventors confirmed that the extract can be used as a relish enhancer of a tea beverage.

As a result of further investigation, the present inventors had discovered that addition of a predetermined proportion of theanine to the tea extract described above can provide fresh flavor. The inventors had further discovered that a low-temperature extract of tea leaves as a theanine source exhibits fresh flavor/mellow taste with moderated bitter/astringent taste, a tea extract exhibiting profound flavor can be produced by enzyme extraction after removal of catechins of the residue of the low-temperature extraction. As a result, the present invention had been completed.

The present invention relates to the following aspects.
1. A tea extract produced by putting tea leaves into contact with a solvent, wherein said tea extract comprises catechins and amino acids containing at least theanine, wherein the total proportion of amino acids to the solid content derived from the tea leaves in the tea extract is 7.0 weight % or more, wherein the proportion of the theanine to the amino acids is 0.1 in terms of weight or more and the total proportion of catechins is 8.0 weight % or less on the basis of the solid content derived from the tea leaves in the tea extract, wherein
   a) an extract is excluded which is obtained by using green tea as a raw material; subjecting it in a first step to an aqueous extraction - step a) - of the production process; the aqueous green tea extract that is obtained in this manner is subjected in a second step to a liquid-liquid extraction - step b) - by means of ethyl acetate; in the process, caffeine and a portion of the polyphenols are removed, leading to an enrichment with the desired substances theanine and theogallin; an additional adsorptive enrichment taking place in a third process stage - step c) - via an adsorber that is filled with functionalized divinylbenzene; the aqueous permeate that accumulates in the process is to be discarded; the elution - step d) - is carried out with demineralized water, and two separate partial fractions are obtained in the process; in a further stage - step e) - the respective fraction is concentrated to a dry matter content of approximately 50%; and optionally spray-drying in a further process step, wherein the green tea extract produced in this manner has the following composition relative to dry substance:
      (i) a water content of 3.2%, (ii) an ash content of 24.1%, (iii) the content of the sum of amino acids of 3.52%, (iv) a caffeine content of ≦ 0.01%, (v) a content of L-theanine of 9.71%, and a content of theogallin of 4.65%; wherein the remainder consists of a multitude of substances, namely residual components consisting of 2.5% tannins and 52.3% carbohydrates, acids and acid derivatives;
   (b) a centrifuged, nanofiltered and dried aqueous extract of broken mixed fannings of black tea comprising 6 wt% of theanine, 16 wt% mono- and di-saccharides, 15 wt% ash, 6wt% polyphenols, 6 wt% amino acids others than theanine, and 4 wt% caffeine is excluded; and
   (c) a tea extract obtained by re-dissolving the dried aqueous extract defined in item (b) above in water and filtering through a 5µm filter to yield the aqueous tea extract having a total solids content of 20 wt% and a pH of 4.85 is excluded.
2. The tea extract of Aspect 1, wherein the proportion of the theanine to the amino acids is 0.15 in terms of weight or more.
3. The tea extract of Aspect 1 or 2, wherein the theanine is added as a low-temperature extract prepared by extraction of the tea leaves using a solvent at 40°C or less.
4. The tea extract of any one of Aspects 1 to 3, wherein the tea extract has a Brix in the range of 0.1 to 20%.
5. The tea extract of any one of Aspects 1 to 3, wherein the tea extract is powder.
6. A bottled tea beverage comprising the tea extract according to any one of Aspects 1 to 5.
7. A method of making a tea extract as defined in any one of Aspects 1 to 5, comprising the steps of:
   (1) removing at least part of catechins from tea leaves;
   (2) enzyme-extracting the tea leaves from which the catechins are removed to prepare an enzyme extract; and
   (3) mixing theanine to the enzyme extract to prepare a tea extract containing high concentration of the anine,
   wherein the theanine is a purified theanine derived from tea leaves, or the theanine is added as a low-temperature extract prepared by extracting tea leaves with a solvent at 40°C or less.
8. The method of making a tea extract of Aspect 7, wherein the step of removing the catechins includes extracting the tea leaves with an aqueous solvent at 60°C or more.
9. The method of making a tea extract of Aspect 7, wherein the theanine is added as a low-temperature extract prepared by extraction of the tea leaves with a solvent at 40°C or less.
10. The method of making a tea extract of Aspect 9,
   wherein the tea leaves from which the catechins are removed is the residue after the low-temperature extract is removed.

### ADVANTAGES OF THE INVENTION

The tea extract of the present invention contains high concentrations of amino acids being flavor/mellow components and reduced amounts of catechins being bitter/astringent components, and thus can enhance relish and flavor/mellow taste of food and drink containing the tea extract. In particular, the present invention provides a bottled tea beverage that is prepared by adding the tea extract of the present invention to a tea beverage and that exhibits complex flavor including flesh flavor and plenty of mellow with moderated bitter/astringent taste.

### BRIEF DESCRIPTION OF THE DRAWINGS

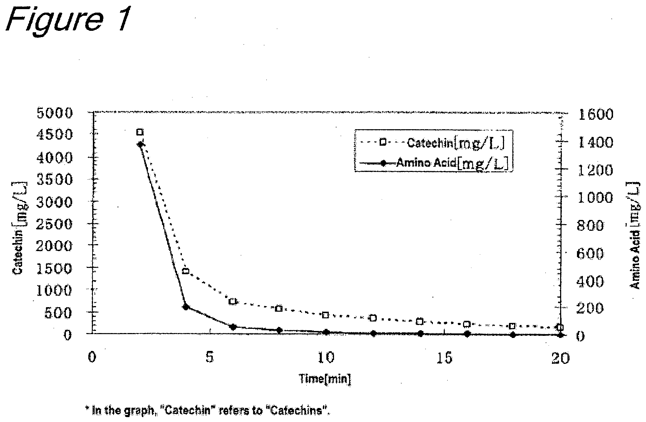

Figure 1 is a graph demonstrating trends of extraction of catechins and amino acids in green tea extraction with deionized water at 25°C under the conditions of Reference Examples (in the drawing, "catechin" refers to "catechins").

### BEST MODE FOR CARRYING OUT THE INVENTION

### (Tea extract)

The tea extract of the present invention contains high concentrations of amino acids being flavor/mellow components and reduced amounts of catechins being bitter/astringent components. The "tea extract" referred to in the specification represents a tea-leaf extract prepared by bringing tea leaves into contact with a solvent particularly an aqueous solvent. Although the tea extract of the present invention can be used as tea beverages without further processing, the extract is generally used as a relish enhancer by being added to food and drink such as water and tea beverages because it is an extract (also referred to as tea extract in the specification) containing a larger amount of soluble solid content than that of tea beverages. In the case that the tea extract of the present invention is liquid, the Brix of the extract is generally in the range of about 0.1 to about 20%. The tea extract of the present invention may be powder prepared from the liquid tea extract by any common procedure.

The "amino acids" referred to in the specification is a collective term of 19 compounds including arginine, lysine, histidine, phenylalanine, tyrosine, leucine, isoleucine, methionine, valine, alanine, glycine, proline, glutamic acid, serine, threonine, aspartic acid, tryptophan, cystine, and theanine, the total amount of the amino acids means the total weight of these 19 compounds.

The tea extract of the present invention (tea extract) is generally prepared by enzyme extraction of tea leaves. The term "enzyme extraction" used herein refers to extraction of enzyme-containing tea leaves with an aqueous solvent or extraction of tea leaves with an enzyme-containing aqueous solvent.

As described above, the tea extract of the present invention is characterized by high concentrations of amino acids and reduced amounts of bitter/astringent components. More specifically, at a proportion of the total catechin content of 8.0 weight % or less to the solid content derived from the tea leaves, in the tea extract, users do not feel bitter/astringent taste. In addition, at a proportion of total content of amino acids to the solid component derived from the tea leaves of 7.0 weight % or more, in the tea extract having such a catechin content, the tea extract exhibits flavor/mellow taste. Since the tea extract of the present invention contains high absolute content of amino acids and high relative content of amino acids to catechins compared to conventional tea extracts, beverages (in particular, tea beverages) containing the tea extract of the present invention exhibit enhanced flavor/mellow taste without increased bitter/astringent taste.

In addition, a tea extract containing a high content of theanine prepared by adding a proportion of theanine to the tea extract of the present invention exhibits enhanced fresh flavor in addition to flavor/mellow taste. The theanine is added such that the theanine content to the amino acids in the tea extract is 0.1 in terms of weight or more, more preferably 0.15 in terms of weight. Alternatively, theanine is preferably added such that the proportion of theanine is 0.3 weight % or more, preferably 0.6 weight % or more, more preferably 0.8 weight % or more, more preferably 1.0 weight % or more, most preferably 1.5 weight % or more to the solid content derived from the tea leaves, in the tea extract containing high content of theanine. Although commercially available purified theanine derived from tea leaves may be used, addition of theanine as low-temperature extract of tea leaves imparts flesher flavor and plenty of mellow to the tea extract due to incorporation of aroma components such as hexanal. The low temperature extract of the tea leaves refers to a product of extraction of tea leaves with an aqueous solvent at 40°C or less, for example, a green tea extract (low-temperature extract) prepared by immersion of green tea leaves with water at 40°C or less and filtration of the solution.

As described above, the tea extract of the present invention can be used as raw material for tea beverages and food and drink such as sweet stuff. The tea extract of the present invention, which exhibits fresh relish and mellow and profound flavor with reduced bitter/astringent taste, not exhibited by conventional tea extracts, is suitable for tea beverages.

The tea extract of the present invention can be used as tea beverages as it is or after being diluted into appropriate concentration, if necessary. The tea beverage contained in a vessel exhibits plenty of mellow and profound flavors with reduced bitter/astringent taste, like high-class tea extract that is prepared by a tea pot and can be daily consumed by users. Examples of the vessel include, but not limited to, PET bottles, cans, bottles, and paper packages.

Adjustment of pH of the tea beverage within the range of about 5.9 to 6.3 can maintain the characteristic flavor of the present invention for long terms and effectively prevent browning. Use of protease in the preparation of the enzyme extract allows tea beverages to exhibit high preservation stability (prevention of precipitation).

### (Method of Making Tea Extract)

The method of making a tea extract of the present invention containing high concentrations of amino acids and being free from catechins is not limited, as long as the tea extract contains the above-mentioned specific contents of amino acids and catechins. For example, a tea extract containing high concentrations of amino acids and reduced amounts of catechins can be prepared by a) a process that involves removing catechins by any known means (for example, resin adsorption) from a low-temperature extract, which contains high concentrations of amino acids, from tea leaves, b) a process that involves immersing green tea leaves in a solution containing about 5 to about 50%, preferably about 10 to about 30% hydrochloric acid at a high temperature (about 80°C) to hydrolyze proteins in the tea leaves into amino acids, while catechins are removed by precipitation (acid treatment process). However, process a) is not efficient, whereas the tea extract prepared by process b), acid treatment process, requires a neutralizing agent to neutralize a large amount of acid, thereby formation of a large amount of salt precluding flavor. The present inventors have found that the tea extract (enzyme extraction solution) of the present invention was able to be readily prepared by at least partially removing catechins from tea leaves, and then enzyme-extracting the tea leaves, contained high concentrations of amino acids, was free from catechins and foreign components such as salts originally not contained in the tea leaves, and exhibited superior flavor. This process can enhance effect of the enzyme on the tea leaves during the enzyme treatment after partial removal of catechins from the tea leaves, resulting in high concentrations of amino acids with reduced amounts of catechins.

The present inventors have also discovered that mixing of the enzyme extract described above with theanine that is separately prepared, in particular, a low-temperature extract of tea leaves provides a tea extract exhibiting mellow/profound flavor, reduced bitter/astringent taste, and flesh flavor.

In the present invention, the step of removing catechins from tea leaves, the step of preparing an enzyme extract from the tea leaves, and the step of preparing a low-temperature extract, if necessary, can be continuously performed in a single extractor, and each step will now be described in detail.

### (First step: Removal of catechins)

As described above, the first feature of the method of making the tea extract of the present invention is removal of catechins from tea leaves. The term "catechins" in the specification indicates a collective term including catechin, epicatechin, gallocatechin, epigallocatechin, catechin gallate, epicatechin gallate, gallocatechin gallate, and epigallocatechin gallate.

Any method that can remove at least part of catechins can be employed without limitation in order to remove catechins from the tea leaves. For example, an aqueous solvent is brought into contact with tea leaves to produce a tea leaf extract, and the extract is removed (discarded). Since catechins can be readily extracted at high temperatures, it is preferred that tea leaves are brought into contact with a solvent (preferably water) at a high temperature (preferably 60°C or more) to yield a hot extract and the hot extract is removed (discarded).

Another method of efficiently removing only catechins is use of adsorbable resin, for example, contact with an adsorbable resin at a high temperature (preferably 60°C or more) as is disclosed in, for example, WO2005/077384. Since catechins are selectively removed and other tea-derived components such as flavor components are contained in the extract, the extract can be used as an extraction solvent in the next enzyme extraction step. Catechins in the tea leaves can also be selectively removed by other known processes using acids, alkaline solutions, or organic solvents. For example, tea leaves are immersed in hydrochloric acid with a concentration of about 0.05 to about 5 weight %, preferably about 0.1 to about 2 weight % (acid solution) (pH: about 1 to 4) at a high temperature (about 80°C) to remove catechins by precipitation, thereby an acid solution is obtained.

In view of workability and relish derived from original components of the tea leaves, high-temperature extraction and discard of the extract are preferred.

The usable solvents for high-temperature extraction may be any aqueous solvent, such as distilled water, deionized water, and hydroalcoholic solutions. In view of the boiling point of alcohol, use of distilled water or deionized water is preferred.

The partial removal of catechins from the tea leaves can be determined by measurement of the concentration of the catechins in the high-temperature extract or the acid treatment solution in the step of removing the catechins.

The quantities of the catechins can be determined by any known process, for example, separation analysis such as high-performance liquid chromatography (HPLC) of the filtrate through a filter (0.45 µm).

Examples of usable tea leaves as raw material include unfermented steamed teas (green teas), such as sencha, bancha (coarse green tea), houjicha (roasted green tea), gyokuro, kabusecha (dark grown tea), and tencha (sweet tea); pot-roasted unfermented teas such as ureshinocha, aoyagicha, and various Chinese teas; semifermented teas such as houshu cha (pouchong tea), tekkanon cha (Tie Kuan Yin tea), and oolong tea; and fermented teas such as black tea, awabancha (coarse green tea harvested in the Awa district in Japan), and Pu-er tea. Among these tea leaves, preferred are unfermented teas (ryokucha) and semifermented teas which are predominantly evaluated by flavor/mellow taste.

Although new tea leaves can be used as raw tea leaves, use of extraction residue after low-temperature extraction is preferred as described below in the economical view point because amino acids may also be removed in addition to catechins during the step of removing catechins of the present invention. Preliminary saving of amino acids that can be readily extracted is preferred in view of amino acid yield.

According to the results of investigation by the present inventors, the solid content of a low-temperature extract of green tea leaves contained about 15 to 25 weight % catechins and 1.0 to 7.0 weight % amino acids (including 0.4 to 3.5 weight % theanine), as described below. The proportion of theanine in the amino acids was about 0.4 to 0.5 (refer to Comparative Examples A1 and A1' and Examples D1, D1', and E1). In addition, the solid content of high-temperature extract of green tea leaves contained about 15 weight % catechins and 2.5 weight % amino acids (including 1.5 weight % theanine). The proportion of theanine in the amino acids was about 0.5 (refer to Example B1). Furthermore, the solid content in a high-temperature extract of the residue of low-temperature extraction of green tea leaves contained about 30 to 35 weight % catechins and 0.4 to 2.0 weight % amino acids (including 0 to 1.5 weight % theanine). The proportion of theanine in the amino acids was about 0 to 0.6 (refer to Examples D2, D2', and E2). The solid content in an acid treatment solution to remove catechins contained about 10 weight % catechins and about 3.5 weight % amino acids (including 1.5 weight % theanine). The proportion of theanine in the amino acids was about 0.4 (refer to Example C1).

The results demonstrate that an efficient and simple process of removal of the catechins is high-temperature extraction of an extract residue after low-temperature extraction of green tea leaves and removal (disposal). The results further demonstrate that the low-temperature extract is used as a theanine source that is to be added to an enzyme extract described below because the low-temperature extract of the green tea leaves contains large amounts of amino acids, especially theanine.

### (Second step: Preparation of enzyme extract)

The present invention involves enzyme extraction of the tea leaves from which catechins are removed in the first step. The enzyme extract in the specification refers to extraction with an aqueous solvent of tea leaves to which an enzyme is added or extraction of tea eaves with an aqueous solvent to which an enzyme is added.

Any enzyme that can enrich the amount of the amino acids in the extract can be used. For example, several amino acids such as protease, α-amylase, cellulase, hemicellulase, pectinase, and protopectinase may be used alone or in combination. Among them, preferred is combined use of protease that decomposes insoluble proteins in tea leaves into soluble low-molecular peptides and amino acids and cellulase or pectinase that decomposes fiber in the tea leaves to liberate proteins present in the tea leaves in order to enhance extraction efficiency on the amino acids, in view of extraction efficiency of amino acids.

The cellulase herein refers to an enzyme that hydrolyzes the β-1,4-glycoside bond of the cellulose to generate cellobiose. Any cellulase that can be used in food may be used without restriction regardless of its source and purity. Examples of commercially available cellulases include Cellulosine T2, Cellulosine AC40, and Cellulosine AL (available from Hankyu Kyoei Bussan Kabushiki Kaisha); cellulase "Onozuka" 3S (Yakult Pharmaceutical Industry Co., Ltd.); and cellulase T "Amano" 4 and cellulase A "Amano" 3 (Amano Enzyme Inc.).

The pectinase (also referred to as pectin depolymerase or polygalactouronidase) herein refers to an enzyme that hydrolyze the α-1,4-glycoside bond of polygalacturonic acid (pectinic acid). Any pectinase that can be used in food may be used without restriction regardless of its source and purity, and such pectinase is commercially available for the purpose of clarification of fruit juice and an improvement in yield of extraction. Examples of such pectinases include Cellulosin PC5, Cellulosin PE60, and Cellulosin PEL (available from Hankyu Kyoei Bussan Kabushiki Kaisha); pectinase 3S and pectinase HL (Yakult Pharmaceutical Industry Co., Ltd.); and pectinase "Amano" PL, pectinase "Amano" G (Amano Enzyme Inc.).

The protease herein refers to an enzyme that catalyze of hydrolysis of the peptide bonds of protein and peptide. The protease is roughly classified into endopeptidase (proteinase) that affects protein and peptide to form low-molecular weight peptide and exopeptidase (peptidase) that affects peptide to form amino acids. Any protease among them may be used, and exopeptidase that can form amino acids is particularly preferred. Any protease that can be used in food may be used without restriction regardless of its source and purity, and may be selected in view of optimal pH. Examples of such protease include Orientase 22BF, Orientase 90N, Orientase ONS, Orientase 20A, and Nucleicin (available from Hankyu Kyoei Bussan Kabushiki Kaisha); Punchidase NP-2, Papain soluble, and protease YP-SS (Yakult Pharmaceutical Industry Co., Ltd.); Denatyme AP, Denapcyne, Purified papain for food use (Nagase Chemtex Corporation); and protease M "Amano", protease A "Amano" G, protease P "Amano" 3G, protease N "Amano", glutaminase F "Amano" 100, Newlase F, Pancreatin F, Papain W-40, and Bromelain F (Amano Enzyme Inc.).

The conditions of the enzyme extraction depend on the type of the enzyme used, the type of the tea leaves used, and desired preference. In general, the amount of the enzyme to be added ranges from about 0.0001 to about 0.1, preferably from about 0.001 to about 0.05 parts by weight on the basis of one part by weight of tea leaves. An amount of less than 0.0001 parts by weight leads to insufficient effect on increases in amino acids in the extract. An amount exceeding 0.1 parts by weight leads to an economical disadvantage due to saturated extraction efficiency of amino acids and may affect the taste of the extract in some enzyme.

The temperature of the enzyme extraction may be appropriately selected in view of the optimal conditions for enzyme to be used, and generally ranges from about 20 to about 50°C, preferably about 35 to about 45°C. Enzyme extraction at a temperature lower than 20°C leads to poor extraction efficiency, while enzyme extraction at a temperature higher than 50°C may lead to odd taste of the extract.

The enzyme extraction time may also be appropriately determined, and ranges generally from about 0.5 to about 20 hours, preferably about 5 to about 18 hours. A time shorter than 0.5 hours may cause insufficient enzyme reaction. A time longer than 20 hours leads to an economical disadvantage due to saturated extraction efficiency of amino acids and may affect the taste of the extract in some enzyme.

The pH during the enzyme extraction is preferably set at the optimum PH for the enzyme to be used, and a pH adjuster may be used, if necessary.

Preferably, the enzyme reaction (enzyme extraction) is carried out with stirring or circulation.

After the enzyme reaction, the reaction system is heated at about 60 to about 121 °C for about 2 seconds to 20 seconds to deactivate the enzyme. Next, it is preferred that the tea extract (enzyme extract) is immediately cooled in order to prevent deterioration of relish. The resulting tea extract may be subjected to any separation procedure such as centrifugal separation or filtration to enhance the clearness of the extract, if necessary. Alternatively, the extract may be condensed into concentrated solution. Alternatively, the extract may be dried into a dry substance (powdered form).

The resulting tea extract (enzyme extract) contains high concentrations of amino acids and low concentrations of catechins. As described below, according to investigation by the present inventors, the solid content in an enzyme extract prepared by enzyme extraction of an extract residue (tea leaves) of low-temperature extraction of green tea leaves to remove part of catechins contains about 4.0 to about 6.0 weight % amino acids (including 0.05 to 0.3 weight % theanine) and about 7.0 to 8.5 weight % catechins. The calculated ratio (a/b) of the amino acids (a) to the catechins (b) is 0.6 to 0.7 (refer to Comparative Examples A2 and A2'). The solid content in an enzyme extract prepared by enzyme extraction of an extraction residue (tea leaves) of high-temperature extraction of green tea leaves to remove part of catechins contains about 11 weight % amino acids (including 0.2 weight % theanine) and 0.7 weight % catechins. The calculated ratio (a/b) of the amino acids (a) to the catechins (b) is 15.8 (refer to Example B2). Furthermore, the solid content in an enzyme extract prepared by enzyme extraction of an extraction residue (tea leaves) of high-temperature extraction of an extraction residue of low-temperature extraction of green tea leaves to remove part of catechins contains about 7.5 to about 11.5 weight % amino acids (including 0.03 to 0.7 weight % theanine) and 0.5 to 6.0 weight % catechins. The calculated ratio (a/b) of the amino acids (a) to the catechins (b) is 1.0 to 16.0 (refer to Examples D3, D3', and E3). In addition, the solid content in an enzyme extract prepared by enzyme extraction of tea leaves from which catechins are removed by acid treatment contains about 12.5 weight % amino acids (including 0.3 weight % theanine) and about 8.0 weight % catechins. The calculated ratio (a/b) of the amino acids (a) to the catechins (b) is 1.6 (refer to Example C2).

These results demonstrate that the enzyme extraction after high-temperature extraction or acid treatment of green tea leaves for removing catechins produces enzyme extract containing high concentrations of amino acids and low concentrations of catechins. In view of these results with the results of the first step, enzyme extraction using tea leaves from which catechins are effectively removed produces tea extract (enzyme extract) containing high concentrations of amino acids and low concentrations of catechins. It is believed that the reaction of removal of catechins in the tea leaves leads to an enhancement in the reaction or effects of enzyme.

The amino acid content and the catechin content in the enzyme extract in the second step may be appropriately determined based on the specification of the required tea extract. In general, at a total amino acid content in the solid content of 2.5 weight %, preferably 7.0 weight % or more, the resulting tea extract exhibits flavor/mellow taste. In addition, at a total catechin content in the solid component of 15.0 weight % or less, preferably 10.0 weight % or less, the resulting tea extract substantially does not exhibit bitter/astringent taste. It is confirmed that a tea extract (enzyme extract) having a ratio (a/b) of the amino acid content (a) to the catechin content (b) of 1 or more, preferably 5 or more, more preferably 10 or more, most preferably 15 or more exhibits mellow, profound flavor without bitter/astringent taste and thus is useful as a relish enhancer for tea beverages, for example.

### (Third step: Preparation of tea extract containing high concentration of theanine)

The present invention further provides a tea extract that can be produced by mixing theanine to the tea extract (enzyme extract) prepared by the enzyme extraction described above and exhibits enriched fresh flavor, in addition to mellow, profound flavor. The theanine is preferably added such that the theanine content in the tea extract containing high concentration of theanine is 0.1 in terms of weight or more, preferably 0.15 in terms of weight or more relative to the total amount of the amino acids. Alternatively, the theanine is preferably added such that the proportion of the theanine in the tea extract containing high concentration of theanine is 0.3 weight % or more, preferably 0.6 weight % or more, more preferably 0.8 weight % or more, more preferably 1.0 weight % or more, most preferably 1.5 weight % or more to the solid content derived from the tea leaves. Any theanine may be selected from purified products isolated from tea leaves, concentrated products thereof, and commercially available powdered theanine and liquid theanine. Since the low-temperature extract of tea leaves contains high concentration of theanine as described in the first step, the low-temperature extract of the tea leaves may be added as a theanine source. Use of the low-temperature extract of the tea leaves leads to addition of aroma components such as hexanal, resulting in creation of fresh flavor and plenty of mellow taste. The low-temperature extract of the tea leaves will now be described in further detail.

Examples of usable tea leaves as raw material for a low-temperature extract of the tea leaves include unfermented teas (green teas), such as sencha, bancha (coarse green tea), houjicha (roasted green tea), gyokuro, kabusecha (dark grown tea), and tencha (sweet tea); pot-roasted unfermented teas such as ureshinocha, aoyagicha, and various Chinese teas; semifermented teas such as houshu cha (pouchong tea), tekkanon cha (Tie Kuan Yin tea), and oolong tea; and fermented tea such as black tea, awabancha (coarse green tea harvested in the Awa district in Japan), and Pu-er Tea. Among these tea leaves, preferred are unfermented teas and semifermented teas which are predominantly evaluated by flavor/mellow taste. In addition, use of the same tea leaves as that used in the enzyme extract is preferred in view of relish.

The low-temperature extract can be prepared by extraction of one of the tea leaves with a solvent at low temperature. The low temperature herein refers to about 0 to about 40°C, preferably about 10 to about 30°C. The low-temperature extraction can selectively and efficiently extracts flesh flavor components including aroma components such as hexanal. As described above, theanine corresponds to this fresh flavor components, that is, the theanine is a component extracted at low temperature.

Any extracting solvent that is used in food industry can be used without restriction. Examples of such solvents include distilled water, demineralized water, tap water, ionized alkaline water, ocean deep water, deionized water, deoxygenated water, hydroalcoholic solutions (10 to 90 v/v% alcohol), and water containing inorganic salts. Among them, preferably used are pure water and deionized water. If ions such as calcium or iron ions are dissolved in water, they combine with tannin the extract of the tea leaves to generate insoluble substances or to change the color of the extract.

The amount of the extracting solvent to be used depends on the type of the tea leaves used, the type of the extracting solvent, the extraction temperature, and desired preference. In general, the amount is in the range of 5 to 50 parts by weight for one part by weight of tea leaves.

The extraction time may be appropriately determined, and is generally about 5 to 30 minutes, more preferably 10 to 20 minutes. The investigation by the present inventors confirmed that low-temperature extraction results in rapider leaching of amino acids than catechins, in more detail, entire extraction of amino acids for about 10 minutes in an extraction process using deionized water (25°C) that is ten times the weight of the tea leaves and an increase in proportion of catechins after the entire extraction of the amino acids. Accordingly, it is most preferred that the extraction is finished immediately after the amino acids are completely extracted. Entire extraction of the amino acids can be determined by the time at which leaching of amino acids is no longer observed in the measurement of the amino acid content in the extract at regular time intervals by HPLC or any other means (refer to Reference Example 1).

Any known extraction process may be used without restriction for the low-temperature extraction of the present invention. For example, tea leaves and a solvent are placed into a tank, followed by extraction, and the extract is separated from the tea leaves through a sieve, by optional centrifugal separation or filtration, to recover extract (also referred to as kneader extraction). Alternatively, extraction is carried out by allowing a solvent to flow through tea leaves (flow extraction). In view of extraction efficiency, the flow extraction is preferred. Any flow extraction process, such as so-called drip extraction by shower flow-down and column extraction can be used without restriction. In the column extraction, an up-flow process in which liquid is allowed to flow from the bottom to the top is preferred due to high extraction efficiency and less mesh clogging. In this process, tea leaves are generally placed on a metal mesh. Any other material that can support tea leaves and separate extract from the lea leaves, for example, cloth or paper may also be used instead of the metal mesh. During the extraction, the extractor is hermetically sealed for extraction under pressure. Any additive such as antioxidant may be added.

The resulting low-temperature extract may optionally be subjected to any separation operation, for example, centrifugal separation or filtration in order to improve clearness. In addition, the extract may be condensed into a concentrated solution.

The resulting low-temperature extract contains a large amount of theanine, which is a fresh flavor component among amino acids. A higher theanine content is preferred. The extraction is preferably carried out such that the amount of the extracted theanine is 10 mg or more, preferably 15 mg or, more preferably 20 mg or more for 10 g of tea leaves. Furthermore, the extraction is preferably carried out such that the amount of the extracted theanine is 0.8 weight % or more, preferably 1.0 weight % or more, more preferably 1.5 weight % or more, more preferably 2.0 weight % or more, most preferably 2.5 weight % or more of the entire soluble solid content derived from tea leaves ([g] = total weight of the extract [g]×Brix [%]/100).

In the present invention, mixing of the enzyme extract with the low-temperature extract can provide a tea extract exhibiting superior flavor, as described above. For details, mixing of the enzyme extract, which contains high concentrations of amino acids and exhibits mellow and profound flavor, with the low-temperature extract, which contains a large amount of theanine being a fresh flavor component, can provide a tea extract that exhibits flesh and profound flavor with mellow.

These extracts may be blended in any proportion without restriction, depending on desired preference, such that the theanine content in the resulting tea extract containing high concentration of theanine is 0.1 in terms of weight or more, preferably 0.15 in terms of weight or more of the total amount of amino acids, or such that the theanine content is 0.3 weight % or more, preferably 0.6 weight % or more, more preferably 0.8 weight % or more, more preferably 1.0 weight % or more, most preferably 1.5 weight % or more of the solid content derived from tea leaves in the tea extract containing high concentration of theanine. Preferably, the total amount of low-temperature extract is used in order to secure the effective components in the tea leaves. In such a case, the volume ratio of the enzyme extract to the low-temperature extract is generally about 1:0.1 to 15, preferably about 1:2 to 10.

The amino acid content in the mixed tea extract is 160 mg or more, preferably 180 mg or more, more preferably 200 mg or more for 10 g of tea leaves, and 7.0 weight % of the total soluble solid content derived from tea leaves ([g] = total weight of extract [g]×Brix [%]/100). The theanine content is 10 mg or more, preferably 15 mg or more, more preferably 20 mg or more for 10 g of tea leaves, and 0.3 weight % or more, preferably 0.6 weight % or more, more preferably 0.8 weight % or more, more preferably 1.0 weight % or more, most preferably 1.5 weight % or more of the total soluble solid content derived from tea leaves ([g] = total weight of extract [g]×Brix [%]/100).

On the other hand, the content of catechins in the tea extract is 800 mg or less, preferably 700 mg or less for 10 g of tea leaves, and is 8.0 weight % or less of the total soluble solid content derived from tea leaves ([g] = total weight of extract [g]×Brix [%]/100). As described below, the results of the study by the present inventors demonstrates that a tea extract prepared by mixing of an enzyme extract with a low-temperature extract of tea leaves contains amino acids in a total amount of 2.5 weight % or more of the solid content from tea leaves and exhibits mellow, profound flavor taste. Among tea extracts containing high concentrations of amino acids, an extract having a catechin content (total content of catechins) exceeding 15.0 weight % exhibits slightly bitter/astringent taste (refer to Comparative Example A1); however, an extract having a catechin content of 15.0 weight % or less and an amino acid content (total amount of amino acids) exceeding 5.0 weight % does not exhibit bitter/astringent taste (refer to Comparative Example A1' and Example C3), in particular, extracts having an amino acid content of 7.0 weight % or more exhibit profound flavor taste (refer to Examples D4' and E4), and extracts having an amino acid content of 5.0 weight % or less exhibits slight bitter/astringent taste regardless of a low catechin content of 15.0 weight % or less (refer to Examples B3 and D4).

The resulting tea extract may be mixed with any additive, if necessary. Examples of additives include ascorbic acid and salts thereof, pH modifiers, aroma chemicals, and coloring agents.

The tea extract may be subjected to any separation procedure such as centrifugal separation or filtration to enhance the clearness of the extract, if necessary. Alternatively, the extract may be condensed into concentrated solution or dried into a dry substance (powdered form). The present inventors confirmed that a concentrated solution that was prepared by condensing a tea extract containing high concentration of theanine prepared by mixing an enzyme extract with a low-temperature extract of tea leaves, and a tea extract prepared by freeze-drying the concentrated solution into powder and then dissolving the powder to water (from-concentrate extract) exhibited satisfactory relish.

### EXAMPLES

The present invention will now be described in further detail by way of Examples, but should not be limited to these Examples. In the following Examples (including Reference Examples and Comparative Examples), two types of roasted tea leaves (denoted by "moderately roasted" or "weakly roasted") were used.

### Reference Example 1

Moderately roasted green tea leaves (10 g) were placed into a column extractor, and 100 mL of deionized water at 25°C was added from the top of the extractor to immerse the green tea leaves. Deionized water at 25°C was continuously fed at a flow rate of 50 mL/min for 20 minutes, while the solution continuously discharged from the bottom was sampled every two minutes. The catechin and amino acid contents of the sampled solutions were determined.

Catechins were determined by HPLC under the following conditions.

### (Conditions of HPLC)

HPLC unit: TOSOH HPLC system LC8020 model II
Column: TSK gel ODS80T sQA (4.6 mm by 150 mm)
Column temperature: 40°C
Mobile phase A: water-acetonitrile-trifluoroacetic acid (90:10:0.05)
Mobile phase B: water-acetonitrile-trifluoroacetic acid (20:80:0.05)
Detector: UV 275 nm
Volume injected: 20 µL
Flow rate: 1 mL/min.
Gradient program:

| Time (minutes) | %A | %B |
|---|---|---|
| 0 | 100 | 0 |
| 5 | 92 | 8 |
| 11 | 90 | 10 |
| 21 | 90 | 10 |
| 22 | 0 | 100 |
| 29 | 0 | 100 |
| 30 | 100 | 0 |

Standard substances: catechin, epicatechin, gallocatechin, epigallocatechin, catechin gallate, epicatechin gallate, gallocatechin gallate, and epigallocatechin gallate (Kurita High-Purity Reagents)

Amino acids were also determined by HPLC under the following conditions.

### (Conditions of HPLC)

HPLC units: Waters Amino Acid Analyzer 2695
Column: AccQ-Tag column (3.9 mm by 150 mm)
Column temperature: 40°C
Mobile phase A: AccQ-TagA (pH 5.8)
Mobile phase B: acetonitrile
Mobile phase C: water/methanol = 9/1
Detector: EX 250 nm EM 395 nm, Gain 100
Volume injected: 5 µL
Gradient program:

| Time (min) | Flow rate (ml/min) | %A | %B | %C |
|---|---|---|---|---|
| 0 | 1 | 100 | 0 | 0 |
| 1 | 1 | 99 | 1 | 0 |
| 16 | 1 | 97 | 3 | 0 |
| 25 | 1 | 94 | 6 | 0 |
| 35 | 1 | 86 | 14 | 0 |
| 40 | 1 | 86 | 14 | 0 |
| 50 | 1 | 82 | 18 | 0 |
| 51 | 1 | 0 | 60 | 40 |
| 54 | 1 | 100 | 0 | 0 |
| 75 | 1 | 0 | 60 | 40 |
| 110 | 0 | 0 | 60 | 40 |

Standard substances: 18 amino acids (arginine, lysine, histidine, phenylalanine, tyrosine, leucine, isoleucine, methionine, valine, alanine, glycine, proline, glutamic acid, serine, threonine, aspartic acid, tryptophan, and cystine) and theanine

The results are shown in Fig. 1. Fig. 1 demonstrates that amino acids are extracted at a faster rate than that for catechins (denoted as catechin in the drawing) from green tea leaves and almost entire amounts of amino acids are extracted at about 10 minutes, whereas catechins partially remain at an elapsed time of 20 minutes. It is confirmed that selection of the extracting time at low-temperature extraction results in selective extraction of amino acids (flavor components) with suppressed extraction of catechins (astringent components).

### Reference Example 2

A low-temperature extract was prepared for determination of amino acids and catechins as in Reference Example 1 except that green tea leaves (weakly roasted) were used. The results also show that amino acids are extracted faster than catechins from this green tea leaves and the almost entire amount is extracted at about 10 minutes, like Reference Example 1. The total amount of the amino acids was 167 mg in the extract.

### Comparative Example 1

In a first step, moderately roasted green tea leaves (10 g) were placed into a column extractor, and 100 mL of deionized water at 25°C was added from the top of the extractor to immerse the green tea leaves. Deionized water at 25°C was continuously fed at a flow rate of 50 mL/min for 20 minutes to prepare a low-temperature extract (Sample A1). To the extract residue after extraction of Sample A1, 0.2 g of protease and 0.2 g of pectinase were added. Deionized water at 40°C was added such that the total weight was 160 g, the solution was circulated at a rate of 50 mL/min for 16 hours at 40°C to promote the enzyme reaction. The resulting enzyme-processed solution was heated at 90°C for 10 minutes for deactivation of the enzymes, to prepare an enzyme reaction solution (Sample A2). The total volume of Sample A1 and the total volume of Sample A2 were mixed to prepare a tea extract (Sample A3).

The amino acid contents and the catechin contents in Sample A1 to Sample A3 were determined as in Reference Example 1. The flavor of each sample was evaluated by three expert panelists.

The results are shown in Table 1. The weight (yield) of the recovered solution was 972 g in Sample A1 or 130 g in Sample A2. The amino acid content was 57 mg in Sample A1 or 103 mg in Sample A2. In view of these results with the results in Reference Examples, although almost entire amounts of amino acids are extracted in the first step, the yield of the amino acids is further enhanced by decomposition of proteins during the enzyme treatment in the second step.

The content of the catechins was 671 mg in Sample A1 or 171 mg in Sample A2. These results in view of the results in Reference Examples demonstrate that catechins not extracted in the first step are extracted in the second step. The calculated ratio (a/b) of the amino acids (a) to the catechins (b) in Sample A2 was 0.60.

In the results of flavor evaluation test, Samples A1 and A2 have different characteristics of taste; flesh flavor in Sample A1 while mellow, profound flavor in Sample A2. In addition, Sample A2 was evaluated as slightly bitter/astringent taste probably derived from catechins. A mixed solution (Sample A3) of Sample A1 and Sample A2 exhibited combined flavor characteristics of these two sample solutions, i.e., flesh, mellow, profound flavor with slightly bitter/astringent taste.

**[Table 1]**

| | | A1 | A2 | A3 |
|---|---|---|---|---|
| Yield | [g] | 972 | 130 | 1102 |
| Brix | [%] | 0.32 | 1.86 | 0.50 |
| Soluble solid content | [g] | 3.08 | 2.42 | 5.50 |
| Amino acids | [mg] | 57 | 103 | 160 |
| Amino acids (a) in solid content | [wt%] | 1.85 | 4.26 | 2.91 |
| Theanine (b) in amino acids | [mg] | 27 | 1 | 28 |
| Theanine in solid content | [wt%] | 0.86 | 0.05 | 0.50 |
| Catechins (b) | [mg] | 671 | 171 | 842 |
| Catechins in solid content | [wt%] | 21.76 | 7.08 | 15.31 |
| Amino acids/catechins (a/b) | | 0.09 | 0.60 | 0.19 |
| Theanine/amino acids (c/a) | | 0.47 | 0.01 | 0.17 |
| Flavor Evaluation | | Fresh flavor with bitter/astringent taste | Mellow, profound flavor with slightly bitter/astringent taste | Fresh, mellow, profound flavor with slightly bitter/astringent taste |

### Comparative Example 2

A low-temperature extract (Sample A1') was prepared as in Comparative Example 1 except that the tea leaves used were green tea leaves (slightly roasted), and then an enzyme reaction solution (Sample A2') was prepared from the extraction residue. The total amounts of Samples A1' and A2' were mixed to prepare a tea extract (Sample A3'). Each sample was subjected to determination of amino acids and catechins and sensory evaluation as in Comparative Example 1.

The results are shown in Table 2. The weights of the recovered solution (yield) were 462 g in Sample A1' and 129 g in Sample A2'. The amino acid contents were 120 mg in Sample A1' and 187 mg in Sample A2'. These results in view of the results in Reference Examples demonstrate that almost entire amounts of amino acids are extracted in the first step, like Comparative Example 1, and the yield of the amino acids is further enhanced by decomposition of proteins during the enzyme treatment in the second step.

The contents of the catechins were 337 mg in Sample A1' and 282 mg in Sample A2'. The results in view of the results in Reference Examples demonstrate that catechins not extracted in the first step is extracted in the second step, like Comparative Example 1. The calculated ratio (a/b) of the amino acids (a) to catechins (b) in Sample A2' was 0.66.

The results of the sensory test demonstrate that the enzyme extract (Sample A2') prepared in the second step, which contain reduced amounts of catechins but high concentrations of amino acids, satisfied users discriminating tastes, i.e., mellow, profound, rich flavor with relatively low bitter/astringent taste. Sample A3', which is a mixture of Sample A1' and Sample A2', is a green tea extract exhibiting quite different flavor, i.e., fresh, mellow, profound taste with reduced astringent taste.

**[Table 2]**

| | | A1' | A2' | A3' |
|---|---|---|---|---|
| Yield | [g] | 462 | 129 | 591 |
| Brix | [%] | 0.46 | 2.66 | 0.94 |
| Soluble solid content | [g] | 2.15 | 3.42 | 5.56 |
| Amino acids | [mg] | 120 | 187 | 307 |
| Amino acids (a) in solid content | [wt%] | 5.60 | 5.48 | 5.52 |
| Theanine (b) in amino acids | [mg] | 63 | 9 | 73 |
| Theanine in solid content | [wt%] | 2.94 | 0.28 | 1.30 |
| Catechins (b) | [mg] | 337 | 282 | 619 |
| Catechins in solid content | [wt%] | 15.71 | 8.25 | 11.13 |
| Amino acids/catechins (a/b) | | 0.36 | 0.66 | 0.50 |
| Theanine/amino acids (c/a) | | 0.53 | 0.05 | 0.24 |
| Flavor Evaluation | | Fresh flavor with bitter/astringent taste | Mellow, profound flavor without bitter/astringent taste | Fresh, mellow, profound flavor without bitter/astringent taste |

Comparative Example 3. Production of tea extract (1) In a first step, slightly roasted green tea leaves (10 g) were placed into a column extractor, and 100 mL of deionized water at 75°C was added from the top of the extractor to immerse the green tea leaves. Deionized water at 75°C was continuously fed at a flow rate of 50 mL/min for 70 minutes to prepare a high-temperature extract (Sample B1). To the extract residue after extraction of Sample B1, 0.2 g of protease and 0.2 g of pectinase were added. After deionized water at 40°C was added such that the total weight was 160 g, the solution was circulated at a rate of 50 mL/min for 16 hours at 40°C to promote the enzyme reaction. The resulting enzyme-processed solution was heated at 90°C for 10 minutes for deactivation of the enzymes, to prepare an enzyme reaction solution (Sample B2). The total volume of Sample A1 and the total volume of Sample A2 were mixed to prepare a tea extract (Sample B3).

The amino acid contents and the catechin contents in Sample B1 to Sample B3 were determined as in Reference Example 1. The flavor of each sample was evaluated by three expert panelists.

The results are shown in Table 3. The weight of the recovered solution (yield) was 3406 g in Sample B1 or 139 g in Sample B2. The amino acid content was 175 mg in Sample B1 or 256 mg in Sample B2. The content of the catechins was 1083 mg Sample B1 or 16 mg in Sample B2. These results demonstrate that almost total amounts of amino acids was extracted in the first step (high-temperature extraction) and the yield of the amino acids is further enhanced by decomposition of proteins during the enzyme treatment in the second step, in addition to extraction of free amino acids in the first step (high-temperature extraction).

The difference between Sample A2' in Comparative Example 2 and Sample B2 in Comparative Example 3 is whether the enzyme reaction solution is prepared from the extract residue after the low-temperature extraction or after the high-temperature extraction. In comparison of the amounts of the extracted catechins in Sample A1' with that in Sample B1, the total amount of the extracted catechins in Sample B1 is about 3.2 times that in Sample A1'. In comparison of the amounts of the amino acids in Sample A2' with that in Sample B2, the total amount of the amino acids in Sample B2 is about 1.4 times that in Sample A2'. These results show that high-temperature extraction prior to the enzyme extraction, in other words, removal of catechins leads to an effective enzyme reaction, which results in extraction of large amounts of amino acids. This is because the removal of catechins probably enhances the activity and thus the function of the enzyme.

The calculated ratio (a/b) of the amino acids (a) to the catechins (b) in Sample B2 was 15.79.

**[Table 3]**

| | | B1 | B2 | B3 |
|---|---|---|---|---|
| Yield | [g] | 3406 | 139 | 3445 |
| Brix | [%] | 0.22 | 1.65 | 0.27 |
| Soluble solid content | [g] | 7.36 | 2.29 | 9.65 |
| Amino acids | [mg] | 175 | 256 | 432 |
| Amino acids (a) in solid content | [wt%] | 2.39 | 11.20 | 4.48 |
| Theanine (b) in amino acids | [mg] | 85 | 5 | 90 |
| Theanine in solid content | [wt%] | 1.16 | 0.23 | 0.94 |
| Catechins (b) | [mg] | 1083 | 16 | 1099 |
| Catechins in solid content | [wt%] | 14.72 | 0.71 | 11.40 |
| Amino acids/catechins (a/b) | | 0.16 | 15.79 | 0.39 |
| Theanine/amino acids (c/a) | | 0.48 | 0.02 | 0.21 |
| Flavor Evaluation | | Slightly bitter/astringent taste | Mellow, profound, rich flavor without bitter/astringent taste | Mellow, profound flavor with slightly bitter/astringent taste |

### Example 1. Production of tea extract (2) (reference)

In a first step, slightly roasted green tea leaves (10 g) were placed into a beaker, and 150 mL of 0.2% hydrochloric acid at 80°C was added (pH: 2.0). After five hour immersion at 80°C, 0.32 g of granular sodium hydroxide wad added to adjust the pH at 6.6 (Reference Sample C1). To the extract residue after Reference Sample C1 was extracted, 0.2 g of protease and 0.2 g of pectinase were added. After deionized water at 40°C was added such that the total weight was 160 g, the solution was circulated at a rate of 50 mL/min for 16 hours at 40°C to promote the enzyme reaction. The resulting enzyme-processed solution was heated at 90°C for 10 minutes for deactivation of the enzymes, to prepare an enzyme reaction solution (Sample C2). The total volume of Reference Sample C1 and the total volume of Sample C2 were mixed to prepare a tea extract (Reference Sample C3).

The amino acid contents and the catechin contents in Reference Sample C1, Sample C2 and Reference Sample C3 were determined as in Reference Example 1. The flavor of each sample was evaluated by three expert panelists.

The results are shown in Table 4. The weights of the recovered solution (yield) were 252 g in Reference Sample C1 and 129 g in Sample C2. The amino acid contents were 172 mg in Reference Sample C1 and 325 mg in Sample C2. The contents of the catechins were 442 mg Reference Sample C1 and 203 mg in Sample C2. These results demonstrate that large amounts of catechins are extracted during the first step (acid treatment) and the amount of the amino acids generated during the second step (enzyme treatment) are increased due to decomposition of proteins in addition to extraction of free amino acids in the first step (acid treatment).

In comparison of the amounts of the extracted catechins from Sample A1' in Comparative Example 2 with that from Reference Sample C1 in Example 1, the total amount of the extracted catechins from Reference Sample C1 is about 1.3 times that from Sample A1'. In comparison of the amounts of amino acids from Sample A2' in Comparative Example 2, the total amount of the amino acids in Sample C2 is about 1.7 times that in Sample A2'. The difference between Sample A2' in Comparative Example 2 and Sample C2 in Example 1 is whether the step (weak acid treatment) of removing catechins prior to the enzyme extraction is employed or not. The results in Example 1 also demonstrates that the removal of catechins prior to the enzyme extraction leads to an effective enzyme reaction, which can extracts large amounts of amino acids.

The calculated ratio (a/b) of the amino acids (a) to the catechins (b) in Sample C2 was 1.60.

**[Table 4]**

| | | C1 | C2 | C3 |
|---|---|---|---|---|
| Yield | [g] | 252 | 129 | 380 |
| Brix | [%] | 1.81 | 2.02 | 1.88 |
| Soluble solid content | [g] | 4.55 | 2.60 | 7.15 |
| Amino acids | [mg] | 172 | 325 | 497 |
| Amino acids (a) in solid content | [wt%] | 3.78 | 12.49 | 6.95 |
| Theanine (b) in amino acids | [mg] | 74 | 9 | 83 |
| Theanine in solid content | [wt%] | 1.63 | 0.33 | 1.16 |
| Catechins (b) | [mg] | 442 | 203 | 645 |
| Catechins in solid content | [wt%] | 9.71 | 7.82 | 9.02 |
| Amino acids/catechins (a/b) | | 0.39 | 1.60 | 0.77 |
| Theanine/amino acids (c/a) | | 0.43 | 0.03 | 0.17 |
| Flavor Evaluation | | Flesh flavor with slightly bitter/astringent taste | Mellow, profound flavor without bitter/astringent taste | Flesh, mellow, profound flavor without bitter/astringent taste |

### Comparative Example 4. Production of tea extract (3)

In a first step, moderately roasted green tea leaves (10 g) were placed into a column extractor, and 100 mL of deionized water at 25°C was added from the top of the extractor to immerse the green tea leaves. Deionized water at 25°C was continuously fed at a flow rate of 50 mL/min for 20 minutes to prepare a low-temperature extract (Sample D1). In a second step, 100 mL of deionized water at 75°C was added to the extract residue after the extraction of Sample D1, and the deionized water at 75°C was continuously fed at a flow rate of 50 mL/min for 40 minutes to prepare a high-temperature extract (Sample D2). In a third step, 0.2 g of protease and 0.2 g of pectinase were added as enzymes to the extract residue after the extraction of Sample D2, and deionized water at 40°C was added into a total weight of 160 g. The solution was circulated at a rate of 50 mL/min for 16 hours while being maintained at 40°C for enzyme treatment (reaction). The resulting enzyme-processed solution was heated at 90°C for 10 minutes for deactivation of the enzymes, to prepare an enzyme reaction solution (Sample D3). In a fourth step, the total volume of Sample D1 and the total volume of Sample D2 were mixed to prepare a tea extract (Sample D4).

The amino acid contents and the catechin contents in Sample D1 to Sample D4 were determined as in Reference Example 1. The flavor of each sample was evaluated by three expert panelists.

The results are shown in Table 5. The high-temperature extract (Sample D2) prepared in the second step is discarded in the present invention, which substantially does not contain amino acids but contains catechins, exhibits severe results on flavor evaluation, that is, bitter/astringent taste with unpleasant odors (insipid extract = degarashi). In contrast, the enzyme extract (Sample D3) prepared in the third step contains high concentrations of amino acids but substantially not catechins, and satisfies users discriminating tastes, i.e., mellow, profound, rich flavor without bitter/astringent taste. The calculated ratio (a/b) of the amino acids (a) to catechins (b) in Sample D3 was 15.13. The results demonstrate that the content of catechins in the enzyme extract (Sample D3) prepared in the third step is reduced due to removal of the catechins in the second step.

A mixed green tea extract (Sample D4) of Sample D1 and Sample D3 exhibited complicated flavor with reduced bitter/astringent taste, which is quite different from conventional flavor.

**[Table 5]**

| | | D1 | D2 | D3 | D4 |
|---|---|---|---|---|---|
| Yield | [g] | 975 | 2189 | 130 | 1105 |
| Brix | [%] | 0.32 | 0.07 | 1.53 | 0.46 |
| Soluble solid content | [g] | 3.10 | 1.53 | 1.98 | 5.08 |
| Amino acids | [mg] | 54 | 7 | 154 | 209 |
| Amino acids (a) in solid content | [wt%] | 1.75 | 0.43 | 7.78 | 4.10 |
| Theanine (b) in amino acids | [mg] | 25 | 0 | 1 | 26 |
| Theanine in solid content | [wt%] | 0.81 | 0.00 | 0.03 | 0.50 |
| Catechins (b) | [mg] | 668 | 472 | 10 | 678 |
| Catechins in solid content | [wt%] | 21.54 | 30.82 | 0.51 | 13.34 |
| Amino acids/catechins (a/b) | | 0.08 | 0.01 | 15.13 | 0.31 |
| Theanine/amino acids (c/a) | | 0.46 | 0.00 | 0.00 | 0.12 |
| Flavor Evaluation | | Fresh flavor with bitter/astringent taste | No flavor with highly bitter/astringent taste and unpleasant odors | Mellow, profound, rich flavor without bitter/astringent taste | Mellow, profound, rich flavor with slightly bitter/astringent taste |

The difference between Sample A2, which is the enzyme reaction solution, in Comparative Example 1 and Sample D3, which is the enzyme reaction solution, in Example 3 is whether the step of removing catechins prior to the enzyme extraction is employed or not. In comparison of the amount of the amino acids in Sample A2 with that in Sample D3, the total amount of the amino acids in Sample D3 is about 1.5 times that in Sample A2. These results show that the removal of catechins prior to the enzyme extraction leads to an effective enzyme reaction, which results in extraction of a plenty amount of amino acids. This is because the removal of catechins probably enhances the activity and thus the function of the enzyme.

### Example 2. Production of tea extract (4) (reference)

A low-temperature extract (Reference Sample D1') was prepared as in Comparative Example 4 except that the tea leaves used were green tea leaves (slightly roasted), an enzyme reaction solution (Reference Sample D2') was prepared from the extraction residue, and an enzyme reaction solution (Reference Sample D3') was prepared from the extraction residue. The total amounts of Reference Samples D1' and D3' were mixed to prepare a tea extract (Sample D4'). Each sample was subjected to determination of amino acids and catechins and sensory evaluation by three panelists as in Comparative Example 1.

The results are shown in Table 6. The weights of the recovered solution (yield) were 461 g in Reference Sample D1', 2945 g in Reference Sample D2', and 139 g in Reference Sample D3'. The amino acid contents were 167 mg in Reference D1', 8 mg in Reference D2', and 256 mg in Reference Sample D3'.
These results in view of the results in Reference Examples demonstrate that almost entire amounts of amino acids are extracted in the first step, and the yield of the amino acids is further enhanced by decomposition of proteins during the enzyme treatment in the third step.

The contents of the catechins were 507 mg in Reference Sample D1', 276 mg in Reference Sample D2', and 16 mg in Reference Sample D3'. The results in view of the results in Reference Examples demonstrate that almost entire amounts of catechins not extracted in the first step are extracted in the second step. The calculated ratio (a/b) of the amino acids (a) to catechins (b) in Reference Sample D3' was 15.79.

**[Table 6]**

| | | D1' | D2' | D3' | D4' |
|---|---|---|---|---|---|
| Yield | [g] | 461 | 2945 | 139 | 600 |
| Brix | [%] | 0.53 | 0.06 | 1.66 | 0.79 |
| Soluble solid content | [g] | 2.46 | 1.86 | 2.30 | 4.76 |
| Amino acids | [mg] | 167 | 8 | 256 | 423 |
| Amino acids (a) in solid content | [wt%] | 6.81 | 0.44 | 11.14 | 8.90 |
| Theanine (b) in amino acids | [mg] | 80 | 5 | 1 | 80 |
| Theanine in solid content | [wt%] | 3.25 | 0.28 | 0.03 | 1.69 |
| Catechins (b) | [mg] | 507 | 576 | 16 | 523 |
| Catechins in solid content | [wt%] | 20.64 | 31.05 | 0.71 | 11.00 |
| Amino acids/catechins (a/b) | | 0.33 | 0.01 | 15.79 | 0.81 |
| Theanine/amino acids (c/a) | | 0.48 | 0.67 | 0.00 | 0.19 |
| Flavor Evaluation | | Fresh flavor with bitter/astringent taste | No flavor with highly bitter/astringent taste and unpleasant odors | Mellow, profound, rich flavor with substantially no bitter/astringent taste | Fresh, mellow, profound, rich flavor without bitter/astringent taste |

### Example 3. Production of tea extract (5: Scale-up procedure) (reference)

The productivity of the tea extract of the present invention was investigated.

In a first step, slightly roasted green tea leaves (2.00 kg) were placed into a column extractor, and 26.4 kg of deionized water at 25°C was added from the top of the extractor to immerse the green tea leaves. Deionized water at 25°C was continuously fed at a flow rate of 3.3 L/min for 30 minutes to prepare a low-temperature extract (Reference Sample E1). In a second step, deionized water at 85°C was continuously fed at a flow rate of 3.3 L/min for 60 minutes to prepare a high-temperature extract (Reference Sample E2). In a third step, 40 g of protease and 40 g of pectinase were added as enzymes to the extract residue after the extraction of Reference Sample E2, 6.00 g of ascorbic acid as antioxidant was added, and deionized water at 40°C was added into a total weight of 32 kg. The solution was circulated at a rate of 5.0 L/min for 16 hours while being maintained at 40°C for enzyme reaction. The resulting enzyme-processed solution was heated at 90°C for 10 minutes for deactivation of the enzymes, to prepare an enzyme reaction solution (Reference Sample E3). In a fourth step, the total volume of Reference Sample E1 and the total volume of Reference Sample E3 were mixed to prepare a tea extract (Sample E4).

The amino acid contents and the catechin contents in Reference Sample E1, Reference Sample E2, Reference Sample E3 and Sample E4 were determined as in Reference Example 1.

The results are shown in Table 7. The amino acid contents were 18.8 g in Reference Sample E1, 4.5 g in Reference Sample E2, and 41.8 g in Reference Sample E3. In addition, the catechin contents were 67.3 g in Reference Sample E1, 80.0 g in Reference Sample E2, and 31.4 g in Reference Sample E3.

These results in view of the results in Example 2 demonstrate that the low-temperature extract (Reference Sample E1) and the enzyme extract (Reference Sample E3) have high amino acid contents while the hot-temperature extract (Reference Sample E2) contains large amounts of catechins, like Example 2. Accordingly, the process of the present invention can be scaled up to a practical production level without problems.

**[Table 7]**

| | | E1 | E2 | E3 | E4 |
|---|---|---|---|---|---|
| Yield | [kg] | 87 | 177 | 31 | 118 |
| Brix | [%] | 0.40 | 0.14 | 1.67 | 0.73 |
| Soluble solid content | [kg] | 0.35 | 0.25 | 0.52 | 0.86 |
| Amino acids | [g] | 18.8 | 4.5 | 41.8 | 61 |
| Amino acids (a) in solid content | [wt%] | 5.45 | 1.81 | 8.06 | 7.02 |
| Theanine (b) in amino acids | [g] | 10 | 3 | 4 | 14 |
| Theanine in solid content | [wt%] | 2.90 | 1.06 | 0.70 | 1.58 |
| Catechins (b) | [g] | 67.3 | 80.0 | 31.4 | 99 |
| Catechins in solid content | [wt%] | 19.49 | 32.56 | 6.06 | 11.42 |
| Amino acids/catechins (a/b) | | 0.28 | 0.06 | 1.33 | 0.61 |
| Theanine/amino acids (c/a) | | 0.53 | 0.59 | 0.09 | 0.23 |
| Flavor Evaluation | | Fresh flavor with bitter/astringent taste | No flavor with highly bitter/astringent taste and unpleasant odors | Mellow, profound, rich flavor with substantially no bitter/astringent taste | Fresh, mellow, profound, rich flavor without bitter/astringent taste |

Example 4. Production of tea extract (Powder) (reference) In a first step, the mixed solution (Sample D4') prepared in Example 2 was evaporated into a Brix of 15 to prepare a concentrated extract (Sample F1). In a second step, Sample F1 was freeze-dried to prepare green tea powder (Sample F2). In a third step, an adequate amount of deionized water was added to Sample F2 so as to be Brix 15 to prepare a from-concentrate extract (Sample F3).

The amino acid contents and the catechin contents in Sample F1 and Sample F3 were determined as in Reference Example 1. The flavor of each sample was evaluated by three expert panelists.

The results of the flavor evaluation demonstrate that both Sample F1 and Sample F3 satisfy panelists discriminating tastes, i.e., mellow, profound, rich flavor with less bitter/astringent taste. This shows the flavor of the concentrated extract can be retained after dissolution of freeze-dried powder of the concentrated extract.

### Example 5. Production of tea beverage (reference)

A tea beverage was produced with the tea extract (Reference Sample D4), which was produced in Comparative Example 4). Green tea leaves (45 g) was subjected to extraction with a kneader (80°C, 10 minutes), and the tea leaves were separated with a centrifugal separator and a filter to prepare a green tea solution. An L-ascorbic acid (2 g) and sodium hydrogen carbonate (2 g) were added to the green tea solution in a blending tank, Reference Sample D4 was added such that the total content of the amino acids derived from Reference Sample D4 was 20 ppm in the final beverage, and pure water was finally added to prepare a blend solution having a final volume of 7L. The blend solution was UHT-sterilized (130°C, 1 minute), was placed into a 500 mL PET bottle to prepare a bottled green tea beverage. A reference green tea beverage was also prepared in a similar manner except that Reference Sample D4 was not added. The results of the flavor evaluation demonstrate that the green tea beverage containing Reference Sample D4 exhibits novel flavor characteristics, i.e., complicated flavor with reduced astringent, compared to reference green tea beverage not containing Reference Sample D4.

A tea beverage was also produced with the tea extract (Sample D4') produced in Example 2. This tea beverage also exhibited novel flavor characteristics, i.e., complicated flavor with reduced astringency.

## Claims

1. A tea extract produced by putting tea leaves into contact with a solvent, wherein said tea extract comprises catechins and amino acids containing at least theanine, wherein the total proportion of amino acids to the solid content derived from the tea leaves in the tea extract is 7.0 weight % or more, wherein the proportion of the theanine to the amino acids is 0.1 in terms of weight or more and the total proportion of catechins is 8.0 weight % or less on the basis of the solid content derived from the tea leaves in the tea extract,
wherein
a) an extract is excluded which is obtained by using green tea as a raw material; subjecting it in a first step to an aqueous extraction - step a) - of the production process; the aqueous green tea extract that is obtained in this manner is subjected in a second step to a liquid-liquid extraction - step b) - by means of ethyl acetate; in the process, caffeine and a portion of the polyphenols are removed, leading to an enrichment with the desired substances theanine and theogallin; an additional adsorptive enrichment taking place in a third process stage - step c) - via an adsorber that is filled with functionalized divinylbenzene; the aqueous permeate that accumulates in the process is to be discarded; the elution - step d) - is carried out with demineralized water, and two separate partial fractions are obtained in the process; in a further stage - step e) - the respective fraction is concentrated to a dry matter content of approximately 50%; and optionally spray-drying in a further process step, wherein the green tea extract produced in this manner has the following composition relative to dry substance:
(i) a water content of 3.2%, (ii) an ash content of 24.1%, (iii) the content of the sum of amino acids of 3.52%, (iv) a caffeine content of ≦ 0.01%, (v) a content of L-theanine of 9.71%, and a content of theogallin of 4.65%; wherein the remainder consists of a multitude of substances, namely residual components consisting of 2.5% tannins and 52.3% carbohydrates, acids and acid derivatives;
(b) a centrifuged, nanofiltered and dried aqueous extract of broken mixed fannings of black tea comprising 6 wt% of theanine, 16 wt% mono- and di-saccharides, 15 wt% ash, 6wt% polyphenols, 6 wt% amino acids others than theanine, and 4 wt% caffeine is excluded; and
(c) a tea extract obtained by re-dissolving the dried aqueous extract defined in item
(b) above in water and filtering through a 5µm filter to yield the aqueous tea extract having a total solids content of 20 wt% and a pH of 4.85 is excluded.

2. The tea extract of Claim 1, wherein the proportion of the theanine to the amino acids is 0.15 in terms of weight or more.

3. The tea extract of Claim 1 or 2, wherein the theanine is added as a low-temperature extract prepared by extraction of the tea leaves using a solvent at 40°C or less.

4. The tea extract of any one of Claims 1 to 3, wherein the tea extract has a Brix in the range of 0.1 to 20%.

5. The tea extract of any one of Claims 1 to 3, wherein the tea extract is powder.

6. A bottled tea beverage comprising the tea extract according to any one of Claims 1 to 5.

7. A method of making a tea extract as defined in any one of Claims 1 to 5, comprising the steps of:
(1) removing at least part of catechins from tea leaves;
(2) enzyme-extracting the tea leaves from which the catechins are removed to prepare an enzyme extract; and
(3) mixing theanine to the enzyme extract to prepare a tea extract containing high concentration of theanine, wherein the theanine is a purified theanine derived from tea leaves, or the theanine is added as a low-temperature extract prepared by extracting tea leaves with a solvent at 40°C or less.

8. The method of making a tea extract of Claim 7, wherein the step of removing the catechins includes extracting the tea leaves with an aqueous solvent at 60°C or more.

9. The method of making a tea extract of Claim 7, wherein the theanine is added as a low-temperature extract prepared by extracting the tea leaves with a solvent at 40°C or less.

10. The method of making a tea extract of Claim 9, wherein the tea leaves from which the catechins are removed are the residue after the low-temperature extract is removed.

## Patentansprüche

1. Ein Teeextrakt, hergestellt durch in Kontakt bringen von Teeblättern mit einem Lösungsmittel, wobei der Teeextrakt Catechine und Aminosäuren umfasst, die mindestens Theanin enthalten, wobei das Gesamtverhältnis der Aminosäuren zu dem Feststoffgehalt, der sich aus den Teeblättern in dem Teeextrakt ergibt, 7,0 Gew.-% oder mehr beträgt, wobei das Verhältnis des Theanins zu den Aminosäuren 0,1 bezogen auf das Gewicht oder mehr beträgt und das Gesamtverhältnis der Catechine 8,0 Gew.-% oder weniger auf Basis des Feststoffgehalts beträgt, der sich aus den Teeblättern in dem Teeextrakt ergibt,
wobei
a) ein Extrakt, der unter Verwendung von grünem Tee als ein Ausgangsmaterial erhalten wird, ausgeschlossen ist; wobei dieser in einem ersten Schritt - Schritt a) - des Herstellungsverfahrens einer wässrigen Extraktion unterworfen wird; der so erhaltene wässrige Grüntee-Extrakt in einem zweiten Schritt - Schritt b) - einer Flüssig-Flüssig-Extraktion mittels Ethylacetat unterworfen wird; in dem Verfahren Koffein und ein Teil der Polyphenole entfernt werden, was zu einer Anreicherung an den gewünschten Stoffen Theanin und Theogallin führt; wobei eine weitere adsorptive Anreicherung in einer dritten Prozessstufe - Schritt c) - über einen Adsorber, der mit funktionalisiertem Divinylbenzol gefüllt ist, erfolgt; der dabei anfallende, wässrige Durchlauf zu verwerfen ist; die Elution - Schritt d) - mit demineralisiertem Wasser erfolgt, wobei zwei separate Teilfraktionen in dem Verfahren erhalten werden; in einer weiteren Stufe - Schritt e) - die betreffende Fraktion auf einen Trockensubstanz-Gehalt von ca. 50% konzentriert wird; und gegebenenfalls sprühtrocknen in einem weiteren Prozessschritt, wobei der in dieser Weise hergestellte Grüntee-Extrakt die folgende Zusammensetzung, bezogen auf Trockensubstanz, aufweist:
(i) einen Wassergehalt von 3,2%, (ii) einen Aschegehalt von 24,1%, (iii) den Gehalt aus der Summe von Aminosäuren von 3,52%, (iv) einen Koffeingehalt von ≦ 0,01%, (v) einen Gehalt an L-Theanin von 9,71% und einen Gehalt an Theogallin von 4,65%; wobei der Rest aus einer Vielzahl von Stoffen besteht, nämlich Restanteile bestehend aus 2,5% Gerbstoffen und 52,3% Kohlenhydraten, Säuren und Säurederivaten;
(b) ein zentrifugierter, nanofiltrierter und getrockneter wässriger Extrakt aus zerbrochenen gemischten Fannings von schwarzem Tee, umfassend 6 Gew.-% an Theanin, 16 Gew.-% an Mono- und Di-Sacchariden, 15 Gew.-% Asche, 6 Gew.-% Polyphenole, 6 Gew.-% Aminosäuren mit Ausnahme von Theanin und 4 Gew.-% Koffein, ausgeschlossen ist; und
(c) ein Teeextrakt, erhalten durch erneutes Lösen des im obigen Punkt (b) definierten getrockneten wässrigen Extrakts in Wasser und Filtern durch einen Filter von 5 µm, um den wässrigen Teeextrakt mit einem Gesamtfeststoffgehalt von 20 Gew.-% und einem pH-Wert von 4,85 zu erhalten, ausgeschlossen ist.

2. Der Teeextrakt nach Anspruch 1, wobei das Verhältnis des Theanins zu den Aminosäuren 0,15 bezogen auf das Gewicht oder mehr beträgt.

3. Der Teeextrakt nach Anspruch 1 oder 2, wobei das Theanin als ein Niedertemperaturextrakt hinzugefügt ist, das durch Extraktion der Teeblätter unter Verwendung eines Lösungsmittels bei 40 °C oder weniger hergestellt wird.

4. Der Teeextrakt nach einem der Ansprüche 1 bis 3, wobei der Teeextrakt ein Brix in dem Bereich von 0,1 bis 20 % aufweist.

5. Der Teeextrakt nach einem der Ansprüche 1 bis 3, wobei der Teeextrakt Pulver ist.

6. Ein abgefülltes Teegetränk, umfassend den Teeextrakt nach einem der Ansprüche 1 bis 5.

7. Ein Verfahren zur Herstellung eines Teeextrakts, wie in einem der Ansprüche 1 bis 5 definiert, umfassend die Schritte:
(1) Entfernen von mindestens einem Teil der Catechine aus den Teeblättern;
(2) Enzym-Extrahieren der Teeblätter, aus welchen die Catechine entfernt sind, zum Herstellen eines Enzymextrakts; und
(3) Mischen von Theanin zu dem Enzymextrakt zum Herstellen eines Teeextrakts, der hohe Konzentration von Theanin enthält, wobei das Theanin ein gereinigtes Theanin aus Teeblättern ist, oder das Theanin als ein Niedertemperaturextrakt zugefügt wird, der durch Extrahieren von Teeblättern unter Verwendung eines Lösungsmittels bei 40 °C oder weniger hergestellt wird.

8. Das Verfahren zur Herstellung eines Teeextrakts nach Anspruch 7, wobei der Schritt des Entfernens der Catechine das Extrahieren der Teeblätter mit einem wässrigen Lösungsmittel bei 60 °C oder mehr einschließt.

9. Das Verfahren zur Herstellung eines Teeextrakts nach Anspruch 7, wobei das Theanin als ein Niedertemperaturextrakt hinzugefügt wird, das durch Extrahieren der Teeblätter mit einem Lösungsmittel bei 40 °C oder weniger hergestellt wird.

10. Das Verfahren zur Herstellung eines Teeextrakts nach Anspruch 9, wobei die Teeblätter, aus welchen die Catechine entfernt werden, der Rückstand sind, nachdem der Niedertemperaturextrakt entfernt ist.

## Revendications

1. Extrait de thé produit en mettant des feuilles de thé en contact avec un solvant, dans lequel ledit extrait de thé comprend des catéchines et des acides aminés contenant au moins de la théanine, dans lequel la proportion totale des acides aminés par rapport à la teneur en matières solides dérivées des feuilles de thé dans l'extrait de thé est supérieure ou égale à 7,0 % en poids, dans lequel la proportion en poids de théanine aux acides aminés est supérieure ou égale à 0,1 et la proportion totale des catéchines est inférieure ou égale à 8,0 % en poids en se basant sur la teneur en matières solides dérivées des feuilles de thé dans l'extrait de thé,
où
a) un extrait est exclu qui est obtenu par utilisation de thé vert en tant que matière première ; soumission de celui-ci dans un premier temps à une extraction aqueuse - étape a) - du processus de préparation ; l'extrait aqueux de thé vert qui est obtenu de cette manière est soumis dans une deuxième étape à une extraction liquide-liquide - étape b) - au moyen d'acétate d'éthyle ; dans ce processus, la caféine et une partie des polyphénols sont éliminées, ce qui conduit à un enrichissement des substances souhaitées théanine et théogalline ; un enrichissement par adsorption supplémentaire se produisant dans une troisième étape du processus - étape c) - au moyen d'un adsorbeur qui est rempli de divinylbenzène fonctionnalisé ; le perméat aqueux qui s'accumule dans le processus doit être rejeté ; l'élution - étape d) - est conduite avec de l'eau déminéralisée, et deux fractions partielles séparées sont obtenues dans le processus ; dans une étape supplémentaire - étape e) - la fraction respective est concentrée à une teneur en matière sèche d'environ 50 %; et facultativement, séchage par pulvérisation dans une étape supplémentaire du processus, où l'extrait de thé vert produit de cette manière a la composition suivante par rapport à la substance sèche :
(i) une teneur en eau de 3,2 %, (ii) une teneur en cendres de 24,1 %, (iii) une teneur de la somme des acides aminés de 3,52 %, (iv) une teneur en caféine ≤ 0,01 %, (v) une teneur en L-théanine de 9,71 % et une teneur en théogalline de 4,65 %; où le reste étant constitué d'une multitude de substances, à savoir des composants résiduels constitués de 2,5 % de tanins et 52,3 % de glucides, acides et dérivés d'acide ;
(b) un extrait aqueux centrifugé, nanofiltré et séché de feuilles mixtes broyées (fannings) de thé noir comprenant 6 % en poids de théanine, 16 % en poids de mono- et disaccharides, 15 % en poids de cendres, 6 % en poids de polyphénols, 6 % en poids d'acides aminés autres que la théanine et 4 % en poids de caféine est exclu ; et
(c) un extrait de thé obtenu par redissolution de l'extrait aqueux séché défini au point (b) ci-dessus dans de l'eau et filtration à travers un filtre de 5 µm pour obtenir l'extrait aqueux de thé ayant une teneur totale en solides de 20 % en poids et un pH de 4,85 est exclu.

2. Extrait de thé selon la revendication 1, dans lequel la proportion en poids de la théanine aux acides aminés est supérieure ou égale à 0,15.

3. Extrait de thé selon la revendication 1 ou 2, dans lequel la théanine est ajoutée sous forme d'extrait à basse température préparé par extraction des feuilles de thé en utilisant un solvant à 40 °C ou moins.

4. Extrait de thé selon l'une quelconque des revendications 1 à 3, dans lequel l'extrait de thé a un Brix compris dans la plage allant de 0,1 à 20 %.

5. Extrait de thé selon l'une quelconque des revendications 1 à 3, dans lequel l'extrait de thé est une poudre.

6. Boisson à base de thé en bouteille comprenant l'extrait de thé selon l'une quelconque des revendications 1 à 5.

7. Procédé de préparation d'un extrait de thé selon l'une quelconque des revendications 1 à 5, comprenant les étapes consistant à :
(1) éliminer au moins une partie des catéchines des feuilles de thé ;
(2) extraire avec une enzyme les feuilles de thé desquelles les catéchines ont été éliminées pour préparer un extrait enzymatique ; et
(3) mélanger la théanine à l'extrait enzymatique pour préparer un extrait de thé contenant une concentration élevée en théanine, dans lequel la théanine est une théanine purifiée dérivée de feuilles de thé, ou bien la théanine est ajoutée sous la forme d'un extrait à basse température préparé par extraction de feuilles de thé avec un solvant à 40 °C ou moins.

8. Procédé de préparation d'un extrait de thé selon la revendication 7, dans lequel l'étape consistant à éliminer les catéchines comprend l'extraction des feuilles de thé avec un solvant aqueux à 60 °C ou plus.

9. Procédé de préparation d'un extrait de thé selon la revendication 7, dans lequel la théanine est ajoutée sous forme d'un extrait à basse température préparé par extraction des feuilles de thé en utilisant un solvant à 40 °C ou moins.

10. Procédé de préparation d'un extrait de thé selon la revendication 9, dans lequel les feuilles de thé desquelles les catéchines sont éliminées sont le résidu une fois que l'extrait à basse température est éliminé.
